Europäisches Patentamt

European Patent Office

Office européen des brevets

(11) Publication number : **0 319 485 B1**

# (12) EUROPEAN PATENT SPECIFICATION

(45) Date of publication of patent specification :
26.02.92 Bulletin 92/09

(51) Int. Cl.⁵ : **F16L 11/16,** F16L 11/11,
                    F23J 13/02

(21) Application number : **88830493.8**

(22) Date of filing : **18.11.88**

(54) **Flexible pipe in particular for exhausting fume of residuum after combustion, such pipe being obtained by coupling together at least two walls.**

(30) Priority : **25.11.87 IT 6333287 U**

(43) Date of publication of application :
**07.06.89 Bulletin 89/23**

(45) Publication of the grant of the patent :
**26.02.92 Bulletin 92/09**

(84) Designated Contracting States :
**AT BE CH DE ES FR GB GR LI LU NL SE**

(56) References cited :
**DE-A- 2 012 424**
**US-A- 1 453 220**
**US-A- 3 540 489**

(73) Proprietor : **Menini, Ivana**
**Via C. Battisti, 11**
**San Martino Buon Albergo (Verona) (IT)**

(72) Inventor : **Menini, Ivana**
**Via C. Battisti, 11**
**San Martino Buon Albergo (Verona) (IT)**

(74) Representative : **Sarpi, Maurizio**
**Studio FERRARIO Via Collina, 36**
**I-00187 Roma (IT)**

EP 0 319 485 B1

Jouve, 18, rue Saint-Denis, 75001 PARIS

## Description

The present invention relates to a flexible pipe to be used in particular for exhausting fumes of residuum after combustion.

The said pipe is obtained by coupling together two layers and is to be mounted for instance inside a chimney or the like.

The purpose of the present invention is to eliminate certain inconveniences that may occur in using conventional pipes for conveying and exhausting fumes to the outside.

The known art in the present field offers various solutions according to which pipes are provided with more layers. However the combination of such layers does not permit to obtain quite practical results, in particular when it is necessary to bend or bow the pipe itself in order to follow a given direction. In fact, when the pipe is bent in order to follow a curved direction, wrinkles and heaves are provoked in the inner part of the pipe if the inner rims are not steadily joined with each other and such wrinkles and heaves prevent a fluent exhaust of the fumes to the outside.

In consequence of the above inconveniences, it is necessary that the pipes are arranged in a well determined sense according to the direction of the fumes.

Moreover, the said pipes are liable to thermic dissipations, especially in their bent parts and such thermic dissipations make the plant less efficient. Furthermore, the said tubes are liable to corrosive infiltrations, caused by the combustion substances which get in the open interstices of the inner wall.

The present invention eliminates the described inconveniences and further ones which affect the conventional pipes and provides a simple, cheap pipe consisting of more coupled walls - at least one inner wall and one outer wall - in which pipe the fumes may flow freely, without being hindered by obstacles and moreover, there being the remarkable advantage of realizing pipes also with large diameters.

In fact, the invention relates to a flexible pipe, in particular for exhausting fumes of residuum after combustion, consisting of two layers that form the inner wall and the outer wall of the pipe, which layers are provided with suitable folds following a helicoidal contour, and which are coupled together so that respective folds fit together and so that also at the interface of the layers the number of folds of the inner layer is less than the number of folds of the outer layer to obtain an easier exhaust of the fumes and the necessary flexibility of the pipe along curves, even when using pipes with large diameters.

The invention will be better understood from the following description with specific reference to the accompanying drawing in which:

– figure 1 shows a schematic perspective view of a pipe sector according to the invention; and

– figure 2 shows a schematic perspective view of a pipe as a whole, according to the invention.

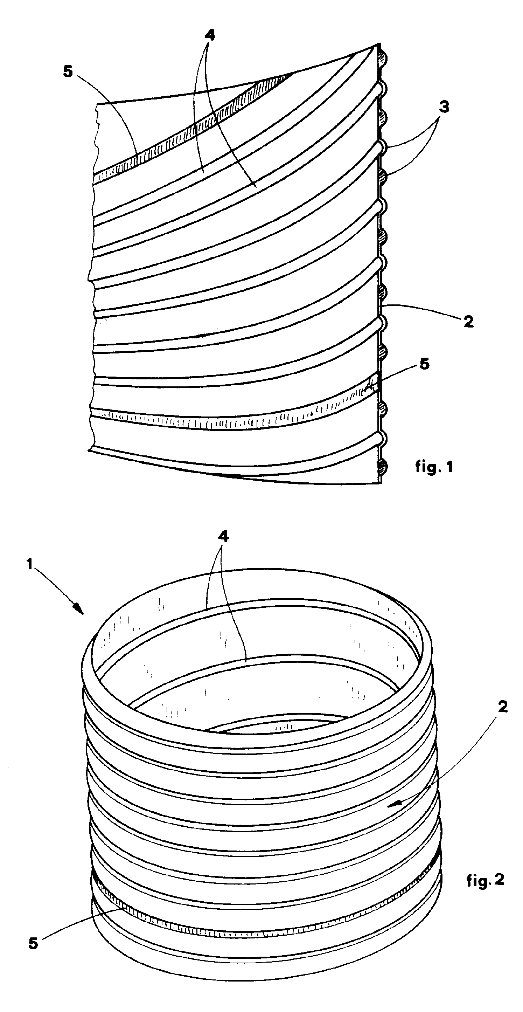

With reference to the accompanying drawing, number 1 denotes a tubular double wall pipe which is carried out with the techniques of bending, pressing and clutching, in which two continuous metallic sheets, or sheets made of other suitable material, are bent, pressed together and clutched.

The outer wall 2 of the pipe 1 is carried out with folds 3 that are turned towards the outside of the pipe, whereas the inner wall 4, which is pressed against the outer wall 2, is provided with a lower number of folds with respect to the outer wall 2 in order that in the discharge phase, the flow of the fumes is fluent inside the pipe, not being hindered by too many hollows.

In the present example, the number of folds of the inner wall is reduced to half the number of folds of the outer wall, however other embodiments may be realized in which the ratio is even lower between the outer folds and the inner folds.

As already described, for realizing the tube, the continuous sheets are bent, pressed against each other in order that the folds of the inner sheet or wall fit together with the folds of the outer sheet or wall, and finally the so-obtained double sheet is passed between rollers or guides which permit the continuous double sheet to be continuously turned according to a helicoidal sense.

In order to assemble the pipe, the rims of contact are continuously pressed, the rims forming thus soldering seams 5.

As shown in the drawing, the so-obtained pipe shows a continuous assembly and owing to the fact that the inner wall is firmly connected with the outer wall, the pipe may be bent also at a very short radius of curvature, without incurring deformations.

A further advantage of the pipe according to the present invention is that the pipe needs not be positioned in the sense of the fume discharge, that is from bottom to top, but the pipe may be mounted in that sense or the opposite sense, indifferently.

Moreover, the cut end of the pipe is not subject to fraying or tearing owing to the tight coupling of the walls, whereas such inconveniences are present in the known art and involve troubles when mounting the pipe.

Finally, a pipe showing the described characteristics may be carried out with different diameters, also very large diameters, the reliability remaining the same.

## Claims

1. A flexible pipe (1), in particular for exhausting fumes of residuum after combustion, consisting of two layers that form the inner wall (4) and the outer wall (2) of the pipe, which layers are provided with suitable folds (3) following a helicoidal contour, and which are coupled together so that respective folds fit together and so that also at the interface of the layers the number of folds of the inner layer is less than the number of folds of the outer layer to obtain an easier exhaust of the fumes and the necessary flexibility of the pipe along curves, even when using pipes with large diameters.

## Patentansprüche

1. Biegsames Rohr (1), insbesondere für Auspuffgasreste nach einer Verbrennung, hergestellt durch Zusammenkuppeln von zwei Wändern, die die Innen- (4) und Aussenwand (2) des Rohrs bilden. Die Wände sind mit entsprechenden Biegungen versehen, die eine schraubenförmige Linie (3) folgen. Sie sind so miteinander verbunden, daß die entsprechenden Biegungen aufeinanderpassen und auch im Raum zwischen den Wänden die Anzahl der Biegungen im Inneren geringer ist, als die Anzahl der Biegungen der Aussenwand, so daß ein problemloser Auspuff der Gase und die notwendige Flexibilität der Rohre entlang der Krümmungen auch bei Verwendung von Rohren mit großem Durchmesser gewährleistet sind.

## Revendications

1. Tuyau flexible (1), en particulier pour l'évacuation des fumées de résidu après combustion, une telle conduite étant obtenue par assemblage de deux parois qui forment la paroi intérieure (4) et la paroi extérieure (2) du tuyau, les deux parois étant pourvus d'opportuns plis (3) qui ont un contour hélicoïdal, ces deux parois sont connectées ensemble d'une façon que les respectifs plis soient joints et d'une façon que aussi dans la surface de séparation des parois le nombre des plis de la paroi intérieure soit inférieure au nombre des plis de la paroi extérieure pour obtenir une évacuation facilité des fumées et la nécessaire flexibilité du tuyau le long des courbes, même quand on utilisent des tuyaux avec de grands diamètres.

fig. 1

fig. 2